# EUROPEAN PATENT APPLICATION

(11) **EP 3 185 073 A1**
(43) Date of publication of application: **28.06.2017**
(21) Application number: 15201608.5
(22) Date of filing: 21.12.2015
(51) Int. Cl.: G03B 42/04

(54) **INTRAORAL POSITIONING DEVICE FOR A DENTAL X-RAY FILM**

(71) Applicant: Polydentia SA, 6805 Mezzovico-Vira (CH)
(72) Inventor: Rossi, Angelo, 6864 Arzo (CH)
(74) Representative: AMMANN PATENTANWÄLTE AG BERN

(57) **Abstract**

The invention relates to an intraoral positioning device for a dental x-ray film (2, 192, 202) the device comprising a film receptor (5, 111, 205, 211, 212, 213, 214) adapted to retain the x-ray film in a film plane, an aiming gauge (61) defining at least one predetermined position of the device relative to an x-ray beam, and an indicator pole (21, 82), the indicator pole comprising a first pole portion (22) and a second pole portion (23, 83) angled to one another, the aiming gauge (61) being attached or attachable to the periphery of the first pole portion (22), and the film receptor (5, 111, 205, 211, 212, 213, 214) being mountable to the second pole portion (23, 83) substantially at an outer end of the indicator pole (21, 82).

In order to allow the recording of a radiograph of a good quality and/or to provide such a device with an increased robustness, the invention proposes that the second pole portion (23, 83) comprises
- a bite section (32, 89) having at least one of a support surface (38, 39) on which a bite block (51, 101) adapted for clenching in between a patient's teeth (56, 57, 156, 157) is attachable and removable and an engagement surface (52, 53, 91, 92, 102, 103) adapted for clenching in between a patient's teeth (56, 57, 156, 157); and
- a back section (41, 85) having a backing surface (43, 95) on which the film receptor (5, 111, 205, 211, 212, 213, 214) is attachable and removable, wherein said backing surface (43, 95) faces the bite section (32,89), such that the film receptor (5, 111, 205, 211, 212, 213, 214) after its attachment to the backing surface (43, 95) is substantially arranged in between the backing surface (43, 95) and the bite section (32, 89).

## Description

The invention relates to an intraoral positioning device for a dental x-ray film. The device comprises a film receptor adapted to retain the x-ray film in a film plane, an aiming gauge defining at least one predetermined position of the device relative to an x-ray beam, and an indicator pole. The indicator pole comprises a first pole portion and a second pole portion angled to one another, the aiming gauge is attached or attachable to the periphery of the first pole portion, and the film receptor is mountable to the second pole portion substantially at an outer end of the indicator pole.

Such a device is disclosed in publication no. EP 0 397 599 A2. The publication relates to the technical problem to position a dental x-ray film with respect to an x-ray source in a reproducible and secure manner inside a patient's oral cavity such that a radiograph of the patient's dentition can be taken as distortion-free and accurate as possible. For this purpose, the film receptor comprises a back and front plate arranged inside a clamping shank in order to prevent any bending of an x-ray film received therein. The bite block is an integral part of the indicator pole and the film receptor is directly adjoined to the bite block by means of a connecting piece which is pivotably attached to the bite block. The aiming gauge is provided as a tip of an indicator which can be adjusted in two tip positions, each tip position indicating a different predetermined position of the device relative to an x-ray beam.

The previously disclosed device, however, has a number of shortcomings. On the one hand, the described fixation of the film receptor on the bite block can cause an undesired displacement of the film receptor and an x-ray film contained therein, in particular when the patient's teeth exert pressure or stress on the bite block or the film receptor or both. This can result in a distortion of the recorded x-ray image. Beyond that, the described arrangement of the clamping shank and/or the front plate in between the x-ray source and the x-ray film can produce artefacts on the radiograph since at least part of the x-ray beam may not only be absorbed by the patient's dentition but also by the clamping shank and/or the front late arranged behind. On the other hand, the use of this device can be rather tedious during a recording of differing viewing angles of the patient's dentition since it may require multiple adjustments at least of the indicator tip, film receptor, and x-ray source.

It is an object of the present invention to remedy at least one of the above mentioned disadvantages and to propose an intraoral positioning device for a dental x-ray film allowing the recording of a radiograph of a good quality, in particular by reducing the impact of an image distortion and/or artefacts. It is another object to allow a facilitated use of such a device, in particular during a positioning of the device to the x-ray beam during the recording of various viewing angles and/or with respect to the handling of multiple constituent parts of the device. It is a further object to provide such a device with an increased robustness, in particular in view of an increased lifespan and/or a more stable and thus reliable applicability.

At least one of these objects is achieved with a device comprising the features of patent claim 1. Advantageous embodiments of the invention are defined by the dependent claims.

Accordingly, in a device according to the invention, the second pole portion comprises a bite section and a backing surface. The bite section has a support surface on which a bite block adapted for clenching in between a patient's teeth is attachable and/or the bite section has an engagement surface adapted for clenching in between a patient's teeth. The back section has a backing surface on which the film receptor is attachable. The backing surface faces the bite section such that the film receptor after its attachment to the backing surface is substantially arranged in between the backing surface and the bite section. In particular, the film receptor after its attachment to the backing surface is preferably arranged in between the backing surface and the bite block after the attachment of the bite block to the support surface.

In this way, the quality of the connection in between the bite block and/or engagement surface and the film receptor can be improved leading to an increased robustness of the device. Moreover, in particular due to the possibility of a more sturdy design of the connection between the bite block and/or engagement surface and the film receptor, a mechanical impact on the position of the film receptor caused by the pressure and/or stress exerted by the patient's teeth on the bite block and/or the film receptor can be reduced such that any distortion of the resulting x-ray image can be minimized. The bite block is preferably removable from the support surface, in particular after its attachment on the support surface. The film receptor is preferably removable from the backing surface, in particular after its attachment on the backing surface.

For this purpose, the film receptor preferably comprises a rear face configured to be attached to the backing surface. The film receptor preferably comprises a film face configured such that the x-ray film can be disposed on the film face. The rear face is preferably arranged opposed to the film face. In particular, the rear face preferably comprises a fixing member configured to be attached to a corresponding fixing member on the backing surface. The fixing member on the rear face is preferably provided as a nose protruding from the rear face and/or a slot recessed in the rear face. The corresponding fixing member on the backing surface is preferably provided as a slot recessed in the backing surface and/or a nose protruding from the backing surface.

Preferably, the second pole portion of the indicator pole extends substantially perpendicular to the film plane. Preferably, the film plane is substantially perpendicular to the support surface and/or engagement surface of the second pole portion. The first pole portion and the second pole portion preferably extend in a common pole plane. Preferably, the pole plane is substantially perpendicular to the film plane. Preferably, the pole plane is substantially perpendicular to the backing surface of the second pole portion. Preferably, the pole plane is substantially coplanar and/or substantially parallel to the support surface of the second pole portion. An enclosed angle in between a direction of extension of the first pole portion and a direction of extension of the second pole portion is preferably in between 30° and 150°, more preferred in between 60° and 120°, and most preferred substantially 90°. Preferably, the backing surface is substantially perpendicular to the support surface.

The second pole portion is preferably adapted to be inserted into a patient's oral cavity. Preferably, the first pole portion is longer as compared to the second pole portion. Such a geometry of the indicator pole can allow an easy and reliable handling of the device during various radiographing procedures that may be required, in particular during its positioning inside the oral cavity of a patient and the recording of an x-ray image. Preferably, the bite section comprises at least a portion comprising an increased width as compared to a mean width of the bridging section and/or the first pole portion. The support surface is preferably provided on said portion of the bite section with the increased width.

According to a first preferred configuration, the bite section is provided on the second pole portion, the bite section adjoining a bridging section of the second pole portion that is connected to the first pole portion at a connection angle. In particular, a first end of the bridging section is preferably connected to the first pole portion and a second end of the bridging section is preferably connected to the bite section. The bite section is preferably angled to the bridging section. An enclosed angle in between a direction of extension of the bridging section and a direction of extension of the bite section is preferably in between 30° and 150°, more preferred in between 60° and 120°, and most preferred substantially 90°.

In particular, the bite section preferably extends substantially in parallel with respect to a direction of extension of the first pole portion. In particular, a value of the connection angle in between the bridging section and the first pole portion preferably substantially corresponds to a value of the connection angle in between the bridging section and the bite section. Preferably, the backing section is adjoined to the bite section. In particular, a first end of the bite section is preferably connected to the bridging section and a second end of the bridging section is preferably connected to the backing section. This described first preferred configuration of the second pole portion can be in particular advantageous for taking radiographs of a patient's periapical.

According to a second preferred configuration, the bite section is provided on the second pole portion, the second pole portion comprising a bridging section and a branch section substantially extending in parallel to one another, wherein the bite section is provided on the branch section. Preferably, the backing section is adjoined to the bridging section. Preferably, the bridging section and the branch section are spaced from one another by a gap. Preferably, the gap increases towards a free end of the bridging section. The backing section is preferably arranged inside the gap between the bridging section and the branch section. Preferably, the branch section is substantially tongue shaped. Preferably, the branch section comprises a bent shaped portion. The bending of the bent shaped portion is preferably directed towards the bridging section. Preferably, the bent shaped portion has a substantially homogeneous width. Preferably, the bite section is provided on the bent shaped portion. Preferably, the branch section and/or the bridging section is connected to the first pole portion.

Preferably, the branch section and/or the bridging section comprise a direction of extension substantially angled to the direction of extension of the first pole portion. An enclosed angle in between a direction of extension of the branch section and/or the bridging section and a direction of extension of the first pole portion is preferably in between 30° and 150°, more preferred in between 60° and 120°. The branch section is preferably located in closer proximity to the first pole portion than the bridging section. This described second preferred configuration of the second pole portion can be in particular advantageous for taking bitewing radiographs.

Preferably, the device according to the invention comprises at least two indicator poles each adapted for at least one of different viewing angles, different viewing formats and different requirements with respect to the patient's teeth. In particular, the device according to the invention preferably comprises two indicator poles, one indicator pole comprising a second pole portion with a bite section according to the above described first preferred configuration and the other indicator pole comprising a second pole portion with a bite section according to the above described second preferred configuration. In this way, the applicability of the device can be enhanced with respect to the particular advantages of each of the described preferred configurations by still limiting the required constituent parts for such a device to a comparatively low number.

According to a first preferred configuration, the bite section is provided with a support surface, more preferred with two opposed support surfaces, on which a bite block adapted for clenching in between a patient's teeth is attachable and removable. According to a second preferred configuration, the bite section is provided with an engagement surface, more preferred with two opposed engagement surfaces, adapted for clenching in between a patient's teeth. According to a third preferred configuration, the bite section is provided with a support surface on which a bite block is attachable and removable, more preferred with two opposed support surfaces, wherein the support surface is also configured to be used as an engagement surface adapted for clenching in between a patient's teeth.

The bite block preferably comprises a plug opening in which the support surface is insertable. The plug opening is preferably provided in front of a plugging cavity inside the bite block. Preferably, the bite section comprises two opposed support surfaces for the bite block. Both opposed support surfaces are preferably insertable, in particular manually pushable, into the plug opening. In this way, the bite section can preferably be attached, in particular be clamped, inside the plugging cavity.

Preferably, the bite block comprises two opposed engagement surfaces for engaging with a patient's teeth. The plug opening and/or the plugging cavity is preferably arranged in between the two engagement surfaces. After insertion into the plug opening, both support surfaces of the bite section are preferably in contact with a respective inner wall delimiting the plugging cavity inside the bite block. In this way, the impact on the support surface of a biting pressure exerted by a patient's teeth on the bite block can be optimized.

According to a first preferred configuration, the bite block comprises two opposed engagement surfaces for engaging with a patient's teeth, the two engagement surfaces substantially extending in parallel to one another. Preferably, the plug opening is arranged at a lateral edge of the bite block in between the two engagement surfaces, more preferred at a substantially equal distance with respect to each of the two engagement surfaces. Preferably, the plugging cavity substantially extends in parallel with respect to the two engagement surfaces. Such a bite block is in particular advantageous for taking a radiograph of a patient's front teeth.

According to a second preferred configuration, the bite block comprises two opposed engagement surfaces for engaging with a patient's teeth, the two engagement surfaces substantially being arranged conically with respect to one another, in particular along wedge shaped lateral faces of the bite block, thus defining a conical tapering of the bite block. Preferably, the plug opening is arranged at a lateral edge of the bite block at which the distance in between the two engagement surfaces is the largest, more preferred at a substantially equal distance with respect to each of the engagement surfaces. Preferably, the plugging cavity extends along a conical tapering of the engagement surfaces. After attachment of the bite block on the bite section, a conical tapering of the two engagement surfaces preferably extends substantially in parallel to the film plane. Such a bite block is in particular advantageous for taking a radiograph of a patient's posterior teeth.

Preferably, the device comprises a plurality of bite blocks for at least one of different viewing angles, different viewing formats and different requirements with respect to the patient's teeth. Preferably, the device according to the invention comprises two bite blocks, one bite block according to the above described first preferred configuration and the other bite block according to the above described second preferred configuration. In this way, the applicability of the device can be enhanced with respect to the particular advantages of each of the described preferred configurations of the bite block by still limiting the required constituent parts for such a device to a comparatively low number.

The provision of the bite block as a piece separate from the indicator pole being attachable and removable from the indicator pole further contributes to a more sturdy design of the positioning device, in particular in that it allows to reduce the mechanical impact from the pressure and/or stress exerted by the patient's teeth on the bite block to the remaining device such that any distortion of the resulting x-ray image can be minimized. The bite block preferably comprises a thermoplastic elastomer (TPE). Preferably, at least the engagement surfaces, and more preferred substantially the whole bite block, is composed of this material. The TPE is preferably chosen from a material with a hardness ranging in between 50 shore A and 58 shore D. This can ensure on the one hand sufficient stability of the device during the radiography procedure and on the other hand a comfortable usage of the device for the patient during engagement of his teeth with the bite block. Moreover, a superior adaption of the patient's occlusal cusps on the bite block can be achieved, thus allowing a stable and substantially not moving fixation of the film receptor on the device during taking of a radiograph.

Preferably, the film receptor comprises a plate with a film face on which the x-ray film can be disposed. Preferably, the film receptor comprises a rear face opposed to said film face. The rear face is preferably configured to be attached to the backing surface. For this purpose, a nose is preferably arranged on the film receptor protruding from its rear face. The nose preferably matches a groove provided at the backing surface of the indicator pole. The groove preferably extends to an outer end of the backing section such that a slot is provided at the outer end. In this way, the nose of the film receptor is preferably insertable into the groove and removable from the groove of the back section of the indicator pole through the slot at the outer end of backing surface.

Preferably, the nose and/or groove substantially extend in a rectilinear direction. Preferably, the nose and/or groove comprise a substantially T-shaped square section. Alternatively or additionally, a groove is preferably provided on the rear face of the film receptor and a respective nose is provided on the backing surface on indicator pole in order to achieve a corresponding attachment of the film receptor on the indicator pole. Such a configuration allows on the one hand an easy yet solid fixation of the film receptor on the indictor pole and on the other hand a robust design of the entire positioning device such that a reliable and stable support of the x-ray film within the oral cavity during radiography can be achieved.

Preferably, an elevation, in particular a knob, is provided on the rear face on at least one side of the nose and/or groove. Preferably, the elevation is provided on both sides of the nose and/or groove with respect to its rectilinear direction of extension. Preferably, the elevation extends substantially perpendicular with respect to the rectilinear direction of extension of the nose and/or groove. Preferably, the elevation is arranged at a center region of the rectilinear extension of the nose and/or groove. A corresponding indentation for each elevation is preferably provided on the backing surface of the back section on at least one side of the nose and/or groove. In this way, the elevation is preferably configured to engage with the indentation during mounting of the film receptor on the back section thus providing a further fixture of the film receptor in a predetermined position. Alternatively or additionally, the elevation can be provided on the backing surface of the back section and the indentation can be provided on the rear face of the film receptor.

Preferably, at least one of the indentation and elevation is arranged on a resilient plate section of the film receptor and/or back section. The resilient plate section is preferably provided by slits in the plate. The slits are preferably neighboring the respective indentation and/or elevation. Preferably, the slits extend substantially in parallel with respect to the rectilinear direction of extension of the nose and/or groove. This can facilitate the engaging of the elevation inside the indentation, in particular such that the elevation snaps into the indentation, and provide a further fixation of the film receptor on the backing surface.

Preferably, the film receptor comprises at least two lateral fixtures in which the x-ray-film is insertable on said film face. The lateral fixtures are preferably arranged at opposed sides of the film receptor. Preferably, at least one of the lateral fixtures comprises a later rail on which a respective edge of an x-ray film is disposable. Preferably, at least one of the lateral fixtures comprises a frontal projection facing the film face of the film receptor by which frontal projection the x-ray-film is retained on the film face. In particular, the frontal projection preferably projects from the lateral rail at a side opposed to the film face. The lateral rail preferably extends over at least one third, more preferred at least one half, of at least one of the total length and total width of the film receptor. According to a first preferred configuration, each of the two lateral fixtures of the film receptor comprises such a lateral rail. Thus, the film can be inserted into the film receiver from one of its side edges by sliding the film on the film face along the lateral rails. This configuration is particularly advantageous for the fixation of an analog x-ray film.

According to a second preferred configuration, at least one of the lateral fixtures of the film receptor comprises at least one snapper, more preferred at least two snappers spaced from one another along a lateral edge of film receptor. Each snapper preferably comprises a resilient plate section of the film receptor. Each snapper preferably comprises a lateral rail. Each snapper preferably comprises a tapered frontal projection facing the film face on a side opposed to the tapering. In this way, the x-ray film can advantageously inserted into the film receiver from its front side by pushing the film toward the film face, thereby causing the snappers to bent backward from the film face as the back side of the film slides across the tapered frontal projections until an outer end of the frontal projections is reached such that the resilient plate sections move back to their initial position on the film face and the frontal projections are located on the front face of the film. This configuration is particularly advantageous for the fixation of a digital x-ray film.

The film receptor according to the above described configurations has the particular advantage of being capable to hold an x-ray film in a defined position in a controlled manner, thus minimizing the danger of uncontrolled displacements, in particular due to forces acting on the positioning device by the impact of a patient's teeth, gum and soft tissues and oral cavity. Another advantage lies in a comparatively gentle handling of the x-ray film requiring only comparatively small forces for its proper fixation on the film plane, in particular in comparison to a film clamp as disclosed in EP 0 397 599 A2, thus also minimizing the danger of damaging the rather sensitive x-ray film, in particular digital x-ray film, during its attachment to the film receptor. The previously known film clamp has another disadvantage that such a large clamping force required to fix the x-ray film is difficult to maintain over a number of sterilization cycles, in particular due to the high sterilization temperatures up to 134°C under saturated steam, since from experience a deformation at least of the involved synthetic material usually occurs during those harsh conditions. In contrast, the film receptor according to the invention can also endure those sterilization cycles, in particular due to its different design requiring smaller clamping forces.

Preferably, the film receptor is substantially open at least at a central portion of said film face, preferably over at least 50%, more preferred at least 80%, of the total area of the film face. More preferred, the film face is substantially only covered by frontal projections of lateral fixtures for the x-ray film. Thus, at least a major portion of the x-ray film can remain uncovered when positioned inside the film receptor with respect to the traveling path of an x-ray beam of an x-ray source provided at the opposed end of the indicator pole. In consequence, the traveling path of the x-ray beam can be provided substantially without any foreign material besides the dental material inside a patient's cavity to be imaged by the x-ray beam. In this way, artefacts can be effectively avoided on the produced x-ray image.

Moreover, the reusability of the positioning device can be improved. In particular, since substantially no features of the positioning device are located in front of the open side portion of the film receptor, the positioning device can be fabricated from a durable, strong and persistent material, in particular a synthetic material such as PPSU and/or PEEK. The lifetime of such a device is in particular determined by its resistance against recondition cycles, such as autoclaving, thermal and/or cold disinfection, and an appropriate material choice can greatly enhance this resistance. In contrast, previous devices are often required to be fabricated from a material that is easily traversed by an x-ray beam, in particular a material comprising a low atomic number, often leading to a short-living and weak construction of such a device.

Preferably, the device comprises a plurality of film receptors for different film formats. Preferably, at least one film receptor comprises lateral fixtures having a respective distance substantially corresponding to the length and/or width of at least one of the film formats 0, 1, 2 and 3. More preferred, at least one separate film receptor for at least two different film formats is provided. More preferred, at least one separate film receptor having a respective distance of its lateral fixtures corresponding to the length of a film with a respective film format and at least one separate film receptor having a respective distance of its lateral fixtures corresponding to the width of a film with a respective film format is provided. Preferably, the nose and/or groove provided on the film receptor extends in parallel to the length or width of the respective x-ray film. More preferred, at least one film receptor comprises a nose parallel to the film width and at least another film receptor comprises a nose parallel to the film length. In this way, the device according to the invention can be easily adapted to many requests and/or requirements, such as predetermined standards, of a radiograph to be taken.

Preferably, the back section comprises a joint, in particular a pivot joint, by which the back section is axially fixed on the indicator pole and radially rotatable around the bite section. Thus, the back section is preferably rotatable in between an upper position and a lower position with respect to the bite section. This can be employed to take a radiograph separately from the upper jaw and lower jaw inside a patient's cavity. Preferably, the joint is arranged on the film receptor behind the bite section and also behind the backing surface. The arrangement of the joint behind the backing surface in particular allows to incorporate a comparatively larger and a more robust rotation mechanism in the device, in particular larger than the height of the bite section. Preferably, the height and/or diameter of the joint is larger than the respective height and/or thickness of the bite section. In this way, the good robustness can be achieved without jeopardizing the quality of the x ray. Thus, the rotation mechanism can also be made more reliable than in previous devices.

Another advantage of the above described fixation of the back section in terms of a radial degree of freedom by using a radial joint can be a more robust design of the positioning device since a force acting on the bite block by a patient's teeth can substantially not affect the quality of the fixation. In contrast, an axial fixation of the back section by means of a pin or the like in the direction of extension of the indicator pole may lead to a displacement and/or unlatching of this fixation upon the impact of a patient's teeth on the bite block which may lead to an lopsided or distorted recording of the radiograph.

Preferably, the aiming gauge comprises at least two indicia, more preferred at least three indicia, each indicium defining a different predetermined position of the device relative to the x-ray beam. Thus, a plurality of indicia is preferably arranged on the same indication panel, more preferred all indicia required for different applications of the device are arranged on the same indication panel. In this way, the indication panel preferably doesn't have to be moved with respect to the position of the indicia for the different applications.

In particular, each indicium comprises at least one symbol adapted to allow a user to adjust the position of an x-ray source with respect to the positioning device. Preferably, the indicia are displayed on an indication panel. Preferably, the indicia are displayed vertically shifted from one another, in a vertical direction substantially perpendicular to the direction of extension of the indicator pole. Preferably, the indicia are substantially equidistantly spaced from one another.

Preferably, each indicium is associated with a respective position of the film receptor and/or a predetermined dental imaging procedure. An upper and a lower indicium is preferably associated with an upper and lower position of the film receptor, respectively. A middle indicium is preferably associated with a medium position of the film receptor. Preferably, each indicium comprises a circle and/or a dot. In this way, the device according to the invention can be used in a versatile way by employing each of the plurality of indicia for a respective application.

Preferably, the indication panel is substantially transparent to the x-ray beam. Preferably, the material of the indication panel comprises or consists of transparent PC or Mylar. This can guarantee a good visual control through the panel of the oral cavity during the positioning of the x ray device in the patient's mouth.

Preferably, the aiming gauge comprises a mounting attachable to first pole portion and removable therefrom. Preferably, the aiming gauge is displaceable along the direction of extension of the first pole portion in order to allow a proper adjustment with respect to its distance from the film plane.

The invention will be described in more detail in the following description of preferred exemplary embodiments with reference to the accompanying drawings. In the drawings:
- Fig. 1: is a perspective view of an intraoral positioning device for a dental x-ray film according to a first embodiment;
- Fig. 2: is a longitudinal sectional view of the device shown in Fig. 1 during operation inside a patient's oral cavity;
- Fig. 3: is an exploded view of mountable components of the device shown in Fig. 1;
- Fig. 4: is an exploded view of an intraoral positioning device for a dental x-ray film according to a second embodiment;
- Fig. 5: is a longitudinal sectional view of the device shown in Fig. 4 during operation inside a patient's oral cavity;
- Fig. 6: is a perspective view of an intraoral positioning device for a dental x-ray film according to a third embodiment;
- Fig. 7: is a longitudinal sectional view of the device shown in Fig. 6 during operation inside a patient's oral cavity;
- Fig. 8: is an exploded view of mountable components of the device shown in Fig. 6;
- Fig. 9: is a lateral sectional view of the device shown in Fig. 8 through an aiming gauge;
- Fig. 10: is a perspective view of an intraoral positioning device for a dental x-ray film according to a fourth embodiment with components in an unmounted state;
- Fig. 11: is a perspective view of the device shown in Fig. 10 at a different viewing angle;
- Fig. 12: is a detailed perspective view of an end portion of the device shown in Fig. 10 illustrating several mounted components;
- Fig. 13: is another detailed perspective view of an end portion of the device shown in Fig. 10 illustrating other mounted components;
- Fig. 14: is a detailed perspective view of the end portion of an indicator pole of the device shown in Fig. 10;
- Fig. 15: is a detailed perspective view of a film receptor of the device shown in Fig. 10;
- Fig. 16: is a detailed perspective view of the film receptor shown in Fig. 15 at a different viewing angle;
- Fig. 17: is a rear view of the film receptor in Fig. 15;
- Fig. 18: is a longitudinal sectional view of the film receptor shown in Fig. 17 along XVIII; and
- Fig. 19: is a lateral sectional view of the film receptor shown in Fig. 17 along XVII.

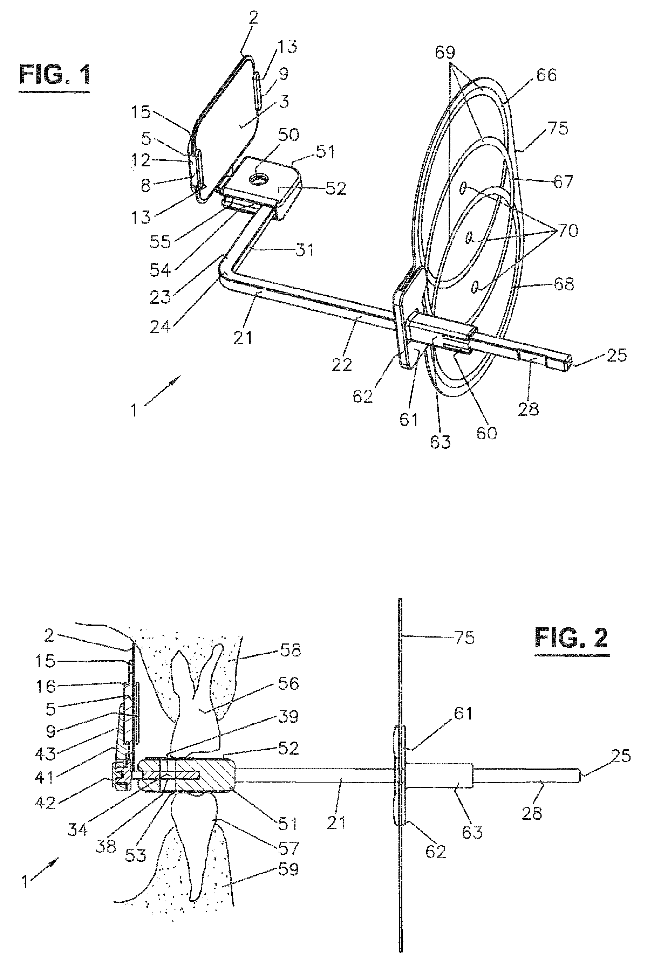

Figs. 1 - 3 show an intraoral positioning device 1 for a dental x-ray film 2 according to a first embodiment. X-ray film 2 is substantially plate shaped and comprises a substantially flat front surface 3. Device 1 comprises a film receptor 5 adapted to retain the x-ray film 2 in a film plane. The film plane corresponds to front surface 3 of x-ray film 2 when it is mounted on film receptor 5. Device 1 further comprises an indicator pole 21 comprising a first pole portion 22 and a second pole portion 23. Film receptor 5 is attachable on second pole portion 23 and removable therefrom. Device 1 further comprises a bite block 51 attachable to second pole portion 23 and removable therefrom. Device 1 also comprises an aiming gauge 61 attachable to first pole portion 22 and removable therefrom.

Film receptor 5 comprises a plate 6 with a film face 7 on which x-ray film 2 can be disposed. Film face 7 substantially extends in parallel to the film plane. The width of film face 7 substantially corresponds to the width of front surface 3 of x-ray film 2. The height of film face 7 is smaller than the height of front surface 3 of x-ray film 2. Film receptor 5 further comprises two lateral fixtures 8, 9 in which x-ray film 2 is insertable. Lateral fixtures 8, 9 are arranged at opposed sides of film receptor 5, in particular at opposed ends along the width of film face 7. Each lateral fixture 8, 9 comprises a lateral rail 12 protruding from film face 7 at a lateral edge of film receptor 5. Lateral rails 12 extend at a center portion of the respective side edge of film face 7, in particular over more than two thirds of the height of film face 7. In this way, x-ray film 2 can be positioned on film face 7 in between lateral rails 12, in particular by sliding x-ray film 2 at its lateral edges along lateral rails 12.

Each lateral fixture 8, 9 also comprises a frontal projection 13 facing film face 7 at a front end of lateral rails 12. Frontal projections 13 substantially extend over the whole length of the respective lateral rail 12. In this way, x-ray film 2 is retained on film face 7 in the film plane. Frontal projections 13 protrude from lateral rails 12 toward the center of film face 7, in particular by less than one tenth of the width of film face 7. Thus, at least a predominant portion of front surface 3 of x-ray film 2 can remain uncovered during positioning of x-ray film 2 inside film receptor 5. In this way, undesired artefacts on x-ray film 2 during the recording of a radiograph inside film receptor 5 can be effectively reduced or avoided.

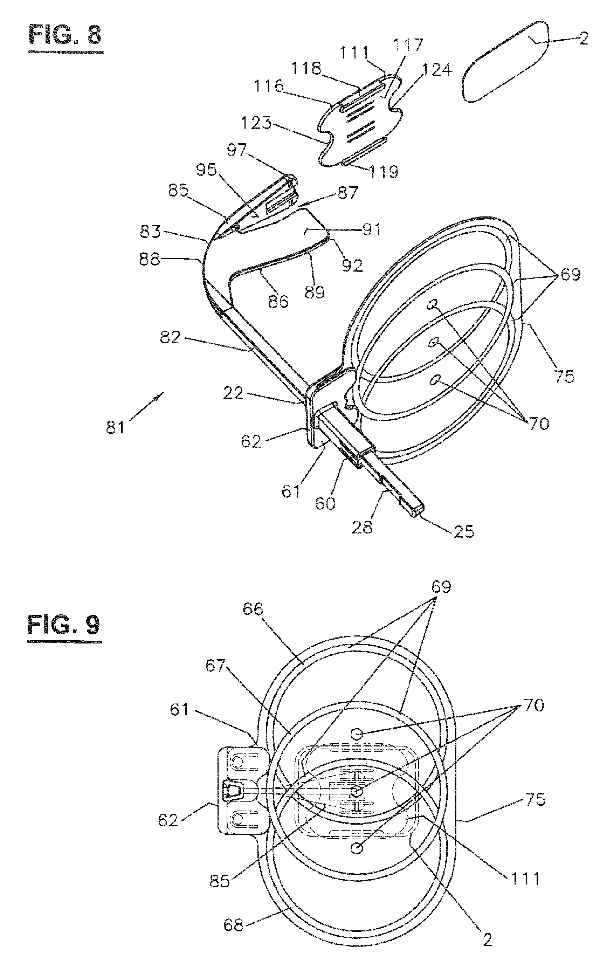

Opposed to film face 7, film receptor 5 comprises a rear face 15. Rear face 15 is configured to be attached to indicator pole 21 of device 1. For this purpose, a nose 16 is arranged at a center of the width of rear face 15, in particular at substantially half of the width of rear face 15. Nose 16 protrudes from rear face 15 and substantially extends over a major portion of the height of rear face 15, in particular over substantially the total height of rear face 15. Nose 16 longitudinally extends substantially in parallel to the shorter edges of film face 7 and substantially perpendicular to the longer edges of film face 7. Nose 16 is configured to be inserted, in particular by a sliding movement, into a corresponding groove 45 provided on indicator pole 21, as further explained below. It is also conceivable, however, to provide a groove on rear face 15 and a respective nose on indicator pole 21 in order to achieve a corresponding attachment of film receptor 21 on indicator pole 21. In the embodiment shown in Figs. 1 - 9, dental x-ray film 2 is an analog film suited for analog radiography. Film receptor 5 is particularly adapted to receive such an analog film. It is also conceivable, however, that film receptor 5 is applied for different kinds of x-ray films, in particular digital films suited for digital radiography.

Dental x-ray film 2 has a film format 2. Film receptor 5 is adapted to receive a film of this film format. For this purpose, the distance in between lateral fixtures 8, 9 substantially corresponds to the length of the longer edges of rectangular front surface 3 of dental x-ray film 2. In this way, the geometry of film receptor 5 is adapted to receive dental x-ray film 2 in a transverse position on indicator pole 21. In this transverse position, x-ray film 2 is disposable in a position inside film receptor 5 in which the longer edges of rectangular front surface 3 of dental x-ray film 2 are substantially parallel to support surfaces 38, 39 for the attachment of bite block 51 and the shorter edges of rectangular front surface 3 of dental x-ray film 2 are substantially perpendicular to support surfaces 38, 39. Such a transverse orientation of x-ray film 2 is suitable, for instance, for radiography of a patient's posterior teeth 56, 57 in the upper and/or lower jaw 58, 59 in this transverse direction, as illustrated in Fig. 2.

Indicator pole 21 comprises a first pole portion 22 and a second pole portion 23 angled to one another. The angle is provided at a connection region 24 between first pole portion 22 and second pole portion 23. Connection region 24 is curved. In particular, indicator pole 21 comprises a bending at connection region 24. Connection region 24 is substantially right-angled. Thus, the angle between first pole portion 22 and second pole portion 23 corresponds to substantially 90°. Indicator pole 21 substantially consists of a synthetic material, in particular PPSU or PEEK.

First pole portion 22 extends in a straight line in a longitudinal direction. First pole portion 22 has a substantially homogenous cross section along the longitudinal direction. The cross section of first pole portion 22 is substantially rectangular, in particular substantially square shaped. First pole portion 22 has an open outer end 25 opposed to an inner end of first pole portion which is adjoined to connection region 24. An x-ray source can be positioned on first pole portion 22, in particular on the periphery of first pole portion 22, more particularly at a region close to its outer end 25.

In proximity to its open outer end 25, more particularly at a distance of less than one fifth of its total length, first pole portion 22 comprises an indentation 28 on its periphery. Indentation 28 is located on a side edge of the square shaped cross section of first pole portion 22. Indentation 28 extends over less than one fourth of the total length of first pole portion 22. At the position of indentation 28, the cross-section of first pole portion 22 is thus reduced. The purpose of indentation 28 is to provide a relaxing zone for a latch 60 of an aiming gauge 61 during the sterilization process, as further described below.

Second pole portion 23 comprises a bridging section 31 and a bite section 32. Bridging section 31 is adjoined to connection region 24. Bridging section 31 extends in a straight line in a horizontal direction substantially perpendicular to first pole portion 22. Bridging section 31 has substantially the same width and substantially the same height, in particular a substantially equivalent cross section, than first pole portion 22.

Bite section 32 is adjoined to bridging section 31 at a second end of bridging section 31 that is opposed to a first end of bridging section 31 to which connection region 24 is adjoined. Bite section 32 is angled to bridging section 31, in particular substantially right-angled. The angle between bite section 32 and bridging section 31 substantially corresponds to 90°. Bite section 32 extends in a longitudinal direction substantially parallel to the longitudinal direction of extension of first pole portion 22. In this way, first pole portion 22, bridging section 31 and bite section 32 are arranged in a Z-shaped manner.

Bite section 32 has a smaller height than bridging section 31. In particular, the height of bite section 32 corresponds to less than two third of the height of bridging section 31. The width of bite section 32 varies, wherein bite section 32 comprises an inner part 34 with a larger width and an outer part 35 with a smaller width. The width of inner part 34 is larger than the width of bridging section 31. The width of outer part 35 is also slightly larger than the width of bridging section 31. Inner part 34 is substantially perpendicularly adjoined to bridging section 31. Inner part 34 protrudes at a side from bite section 32 which is opposed to the side of bite section 32 to which bridging section 31 is adjoined. In this way, a support surface 38, 39 is provided at both the top side and bottom side of inner part 34. Support surfaces 38, 39 can be exploited to attach a bite block 51 to bite section 32. A through-hole 37 extends through bite block 51 substantially at the center of support surfaces 38, 39. Through hole 37 can be used for a further fixation and/or a correct positioning of bite block 51.

Outer part 35 is adjoined to inner part 34 at an outer end of the longitudinal direction of extension of inner part 34. A back section 41 is rotatably fixed to outer part 35 via a pivot joint 42. Pivot joint 42 is arranged at an outer end of outer part 35 opposed to the end of outer part 35 to which inner part 34 is adjoined. Back section 41 is substantially plate shaped. The plate of back section 41 comprises a width increasing from an inner end to an outer end of back section 41. A backing surface 43 is provided by a surface of the plate of back section 41 which faces bite section 32.

Groove 45 is provided at a center of the width of backing surface 43. Groove 45 extends from approximately the middle of the height of back section 41 to the open outer end of back section 41. Groove 45 runs into the outer end of back section 41 such that a slot is provided at the outer end of back section 41. Nose 16 of film receptor 5 matches groove 45. In particular, nose 16 and groove 45 comprise a substantially T-shaped square section. In this way, nose 16 of film receptor 5 is insertable into groove 45 and removable from groove 45 through the slot at the outer end of back section 41.

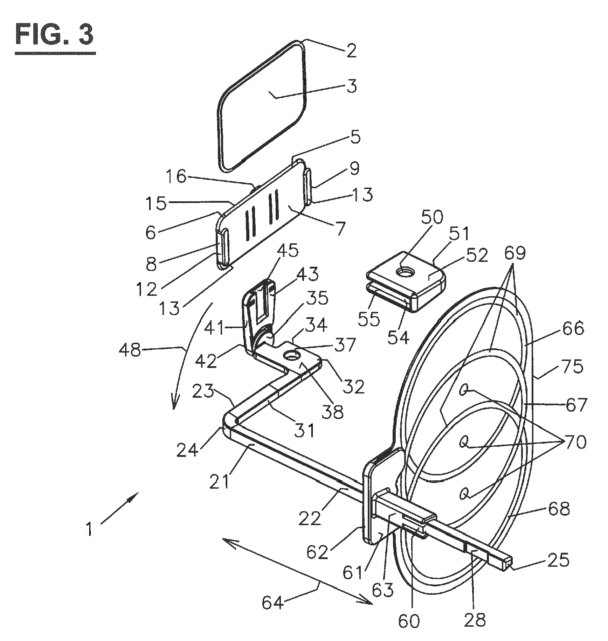

Pivot joint 42 is fixed to back section 41 in proximity to its inner end. Pivot joint 42 is also fixed to the outer end of outer part 35 of bite section 32. Thus, back section 41 is rotatable around bite section 32 via pivot joint 42, more particularly around a rotation axis substantially corresponding to the longitudinal direction of extension of bite section 32. At each position of the rotation, the orientation of backing surface 43 is substantially orthogonal with respect to bite section 32. The rotational degree of freedom of back section 41 is schematically indicated in Fig. 3 by a curved arrow 48. In consequence, backing surface 43 of back section 41 can be rotatably displaced in between an upper position in which it faces bite section 32 and a lower position in which it faces bite section 32. The position of backing surface 43 in the upper position and lower position can be exploited to take a radiograph on the upper jaw 58 and lower jaw 59 inside a patient's oral cavity, respectively. The adjustability of backing surface 43 in between its upper position and lower position facilitates the procedure of taking the radiograph on both the upper and the lower jaw 58, 59.

First pole portion 22 and second pole portion 23 extend in a common pole plane defined by the longitudinal direction of extension of first pole portion 22 and the horizontal direction of extension of second pole portion 23. The pole plane is substantially parallel to support surfaces 38, 39. Backing surface 43 is substantially perpendicular to the pole plane.

Bite block 51 substantially has the shape of a rectangular cuboid with a length and width being substantially equal and a height being smaller. Thus bite block 51 comprises a substantially square shaped upper face 52 and lower face 53 and four smaller lateral faces. Two opposing lateral faces are substantially rectangular and the other two opposing lateral faces are wedge-shaped such that they define a conical tapering of bite block 51. The upper and lower face constitute two engagement surfaces 52, 53 adapted for engaging with a patient's teeth.

Bite block 51 is particularly configured to engage with a patient's posterior teeth 56, 57 due to the wedge shaped arrangement of engagement surfaces 52, 53. This is illustrated in Fig. 2 showing posterior teeth 56, 57 in the upper and lower jaw 58, 59 engaging with engagement surfaces 52, 53. Engagement surfaces 52, 53 extend conically with respect to one another along the two opposing wedge-shaped lateral faces. Bite block 51 comprises rounded corners and edges, in particular to avoid injuries of the patient and also to facilitate the handling and mounting of bite block 51 on second pole portion 23. Bite block 51 substantially consists of a thermoplastic elastomer (TPE) with a material hardness ranging in between 50 shore A and 58 shore D.

Bite block 51 is attachable to second pole portion 23 and removable therefrom. To this purpose, bite block 51 comprises a plugging cavity 54 extending in between engagement surfaces 52, 53. Plugging cavity 54 is delimited at its upper and lower side by a respective inner wall extending substantially in parallel to one another. Plugging cavity 54 is open at two adjacent lateral faces of bite block 51 and laterally delimited by the two remaining adjacent lateral faces. The two open lateral faces of bite block 51 constitute a plug opening 55 through which bite section 32 is insertable into plugging cavity 54 such that support surfaces 38, 39 are in contact with a respective inner wall at the upper and lower side of plugging cavity 54.

After insertion of bite section 32 into plugging cavity 54, bite block 51 is firmly attached to bite section 32, in particular by means of friction in between support surfaces 38, 39 and the respective inner wall of plugging cavity 54. Despite the attachment, bite block 51 can be manually removed from bite section 32, in particular by pulling bite block 51 away from bite section 32. Bite block 51 further comprises a through-hole 50 in the center of engagement surfaces 52, 53. After correct insertion of bite block 51 into plugging cavity 54, through hole 50 of bite block 51 is at a corresponding position than through hole 37 at support surfaces 38, 39 of bite section 32 such that it can be used for correct positioning of bite block 51 on bite section 32 and/or for a further attachment of bite block 51 on bite section 32, in particular by a screw or a similar attachment means.

Aiming gauge 61 comprises a mounting 62 attachable to first pole portion 22 and removable therefrom. Aiming gauge 61 further comprises an indication panel 75 attachable to mounting 62 and removable therefrom. Indication panel 75 comprises a plurality of indicia 66, 67, 68 displayed on a front face of indication panel 75. The front face of indication panel 75 substantially extends in front of the film plane and substantially in parallel with respect to the film plane, more particularly with respect to front surface 3 of x-ray film 2. The material of indication panel 75 is transparent PC or in Mylar in order to guarantee a good visual control through the panel of the oral cavity during the positioning of the x ray device in the patient's mouth.

Indicia 66 - 68 serve as an aiming assistance for a proper alignment of an x-ray source. Each indicium 66 - 68 comprises a circle 69 of equal radius and a dot 70 at its center. Dot 70 can be used to indicate a respective central point of the x-ray beam and/or x-ray source. Circle 69 can be used to indicate a respective physical dimension, in particular a tube circumference, of the x-ray source. In this way, a predetermined positioning of an x-ray source is facilitated. Indicia 66 - 68 are displayed vertically shifted from one another, in a vertical direction substantially perpendicular to the direction of extension of indicator pole 21, in particular perpendicular to first pole portion 22 and to second pole portion 23. Dots 70 are equidistantly spaced from one another in the vertical direction and circles 69 are spaced from one another such that neighboring circles 69 comprise an overlap in the vertical direction of an equal size.

Indicia 66 - 68 are used to indicate a position of front surface 3 of x-ray film 2, in particular a respective position of film receptor 5 attached to back section 41, relative to bite block 51 and/or a position of teeth in a patient's oral cavity, in particular in the upper and/or lower jaw 58, 59 or bitewing or a position in between, from which a radiograph shall be taken relative to bite block 51. Indicia 66 - 68 are associated with a respective predetermined dental imaging procedure. Upper indicium 66 is associated wit h an upper position of film receptor 5 and/or radiography of the upper jaw. Lower indicium 68 is associated with a lower position of film receptor 5 and/or radiography of the lower jaw. Indicator pole 21 is particularly suited for such a separate radiography of the upper and/or lower jaw according to the upper and/or lower position of rotatable back section 41 on indicator pole 21. Middle indicium 67 is associated with a medium position of film receptor 5 and/or radiography from a center view of the bitewing. For such a medium position, a different embodiment of an indicator pole 82 may be employed, as further detailed below.

Mounting 62 comprises a sleeve 63 receiving first pole portion 22 in a slidable manner such that aiming gauge 61 is displaceable along the direction of extension of first pole portion 22. This longitudinal degree of freedom of aiming gauge 61 is indicated in Fig. 3 by a straight arrow 64. This allows a proper manual adjustment of a desired distance of aiming gauge 61 with respect to the film plane. By the rectangular shape of the cross section of first pole portion 22 and a corresponding inner shape of sleeve 63, an undesired rotation of aiming gauge 61 around first pole portion 22 is effectively avoided. Mounting 62 further comprises a latch 60 adapted to engage with indentation 28 in proximity to open outer end 25 of first pole portion 22. Thus, an undesired slipping of aiming gauge 61 off open outer end 25 of first pole portion 22 can be avoided. Another purpose of indentation 28 is to provide a relaxing zone for latch 60 of aiming gauge 61 during the sterilization process, as already mentioned above.

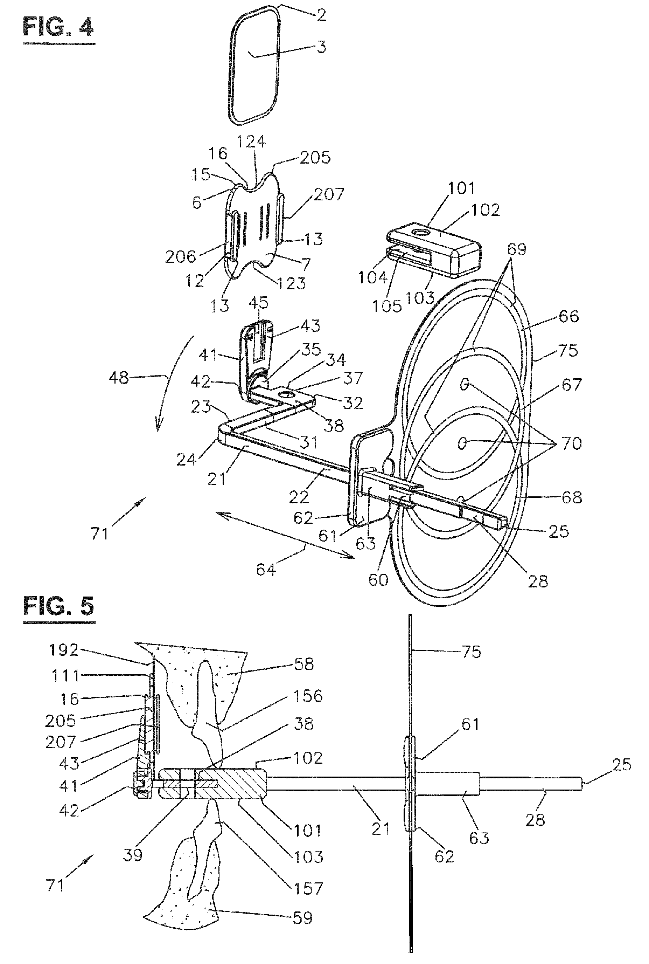

Figs. 4 and 5 show an intraoral positioning device 71 for dental x-ray film 192 and film receptor 207 according to a second embodiment. Corresponding features with respect to intraoral positioning device 1 shown in Figs. 1 - 3 are denoted by the same reference numerals. Device 71 substantially corresponds to device 1, with the exception that it comprises a different bite block 101 and a different film receptor 205.

Film receptor 205 substantially corresponds to film receptor 5, in particular in that it comprises a plate 116 with a film face 117 on which an x-ray film can be disposed and lateral fixtures 118, 119 each having a lateral rail protruding from film face 117 at a lateral edge of film receptor 111 and a frontal projection facing film face 117 allowing to position and hold an x-ray film on film face 117 in between lateral fixtures 118, 119. Film receptor 205 is adapted to receive analog film 192 having a film format 0. In particular, the distance in between lateral fixtures 206, 207 substantially corresponds to the length of the shorter edges of the rectangular front surface of dental x-ray film 192. In contrast to film receptor 5, however, the distance in between lateral fixtures 118, 119 substantially corresponds to the length of the shorter edges of rectangular front surface 3 of dental x-ray film 192. Thus, dental x-ray film 192 can be inserted in a vertical orientation in contrast to the horizontal orientation of dental x-ray film 2 shown in Fig. 5.

Beyond that, the shape of film receptor 205 also deviates from the substantially rectangular shape of film receptor 5. Film receptor 205 comprises a length and width that is substantially equal. A respective indentation 123, 124 is provided at the center of its upper and lower edges. The indentation is curved. The indentations 123, 124 allow a facilitated manipulation of film receptor 205, in particular by placing a thumb and an index finger of a user in indentations 123, 124. Moreover, the varying shape of film receptor 205 allows an easy distinction from film receptor 5 for the user. The upper and lower edge of film receptor 205 is substantially rectilinear.

Bite block 101 substantially has the shape of a rectangular cuboid with a length being larger than its width and a height being smaller than its length and width. Thus bite block 101 comprises a substantially rectangular shaped upper face 102 and lower face 103 and four smaller lateral faces. The four lateral faces are substantially rectangular such that upper face 102 and lower face 103 are substantially parallel to one another. The upper and lower faces constitute two engagement surfaces 102, 103 adapted for engaging with a patient's teeth.

Bite block 101 is particularly configured to engage with a patient's front teeth 156, 157 due to the parallel engagement surfaces 102, 103. This is illustrated in Fig. 5 showing front teeth 156, 157 in the upper and lower jaw 58, 59 engaging with engagement surfaces 102, 103. Bite block 101 comprises rounded corners and edges, in particular to avoid injuries of the patient and also to facilitate the handling and mounting of bite block 101 on second pole portion 23. Bite block 101 substantially consists of a thermoplastic elastomer (TPE) with a material hardness ranging in between 50 shore A and 58 shore D.

Bite block 101 can be used on indicator pole 21 shown in Figs. 1 - 5. Bite block 101 is attachable to second pole portion 23, and removable therefrom. To this purpose, bite block 101 comprises a plugging cavity 104 extending in between engagement surfaces 102, 103. Plugging cavity 104 is delimited at its upper and lower side by a respective inner wall extending substantially in parallel to one another. Plugging cavity 104 is open at two adjacent lateral faces of bite block 101 and laterally delimited by the two remaining adjacent lateral faces. The two open lateral faces of bite block 101 constitute a plug opening 105 through which bite section 32, is insertable into plugging cavity 104 such that support surfaces 91, 92 are in contact with a respective inner wall at the upper and lower side of plugging cavity 104.

After insertion of bite section 32 into plugging cavity 104, bite block 101 is firmly attached to bite section 32, in particular by means of friction in between support surfaces 38, 39 and the respective inner wall of plugging cavity 104. Despite the attachment, bite block 101 can be manually removed from bite section 32, in particular by pulling bite block 101 away from bite section 32. Correspondingly, also bite block 51 can be used on indicator pole 21 according to the first embodiment shown in Figs. 1 - 3.

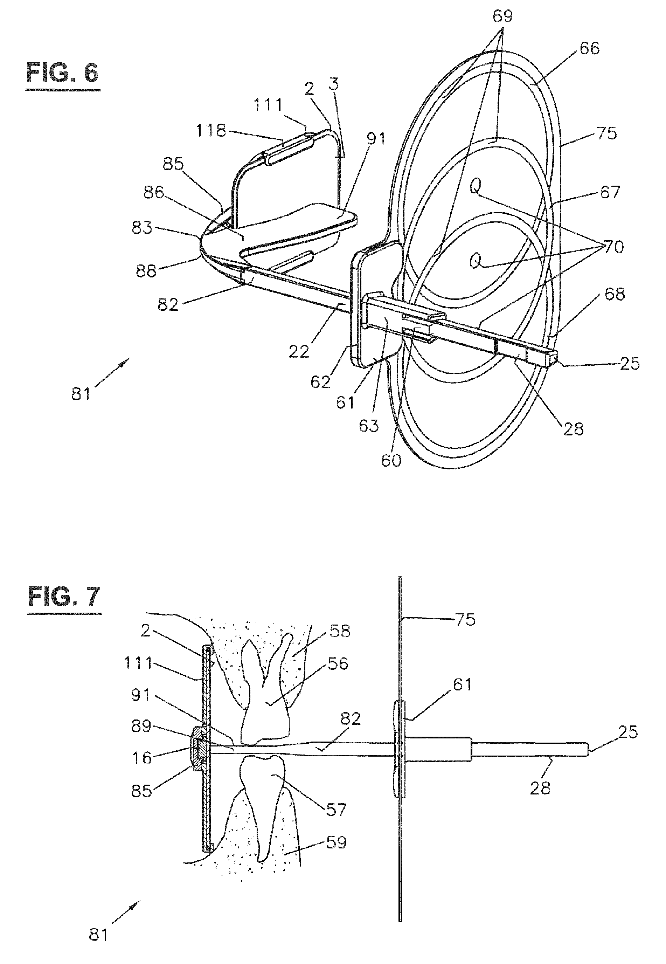

Figs. 6 - 9 show an intraoral positioning device 81 for dental x-ray film 2 according to a third embodiment. Corresponding features with respect to intraoral positioning devices 1, 71 shown in Figs. 1 - 5 are denoted by the same reference numerals.

Device 81 comprises an indicator pole 82 with a first pole portion substantially corresponding to first pole portion 22 of device 1 and a differing second pole portion 83. Second pole portion 83 comprises a bridging section 85 and a branch section 86. Bridging section 85 and branch section 86 extend in parallel to one another separated by a gap 87. Gap 87 increases toward an open outer end of bridging section 85 and branch section 86. Branch section 86 is arranged in front of bridging section 85, in particular in between bridging section 85 and aiming gauge 61. The outer ends of bridging section 85 and branch section 86 substantially have the same distance from first pole portion 22 in a direction perpendicular to the direction of extension of first pole portion 22. Bridging section 85 and branch section 86 are adjoined to one another at their inner end on a common connection region 88.

Connection region 88 is curved. At the beginning of its curvature, connection region 88 is adjoined to first pole portion 22. Thus, an angle is provided at connection region 88 between first pole portion 22 and second pole portion 83. Connection region 88 is substantially right-angled. Thus, the angle between first pole portion 22 and second pole portion 83 corresponds to substantially 90°. Bridging section 85 and branch section 86 extend in a transverse direction with respect to first pole portion 22. In particular, bridging section 85 extends in a horizontal direction substantially perpendicular to first pole portion 22.

Branch section 86 comprises a bent shaped portion directed towards bridging section 85. On the bent shaped portion, the angle between first pole portion 22 and branch section 86 varies from substantially smaller than 90° close to the inner end of branch section 86 to substantially equal to 90° at the open outer end of branch section 86. Branch section 86 comprises a tongue shaped portion having a length larger than its width and/or a width and length larger than its height.

Adjacent to its open outer end, a bite section 89 is provided on branch section 86. An engagement surface 91, 92 is provided at both the top side and bottom side of bite section 89. Mutually opposed engagement surfaces 91, 92 are adapted for clenching in between a patient's teeth. Thus, no additional bite block is required for this device. Back section 85 is substantially plate shaped. The plate of back section 85 comprises a width increasing from its inner end to its open outer end. A backing surface 95 is provided by a surface of the plate of back section 85 which faces bite section 89. A groove 97 is provided at a center of the height of backing surface 95. Groove 95 extends from an inner region of the width of back section 85 to the open outer end of back section 85. Groove 97 runs into the outer end of back section 85 such that a slot is provided at the outer end of back section 85. Thus, groove 95 on indicator pole 82 has a substantially perpendicular orientation as compared to groove 45 on indicator pole 21 when rotatable back section 41 is in its upper or lower position. Nose 16 of a film receptor 111 matches groove 97. In this way, nose 16 of film receptor 111 is insertable into groove 97 and removable from groove 97 through the slot at the outer end of back section 85.

Indicator pole 82 substantially consists of a synthetic material, in particular PPSU or PEEK. Indicator pole 82 is particularly adapted for bitewing radiography. In particular, the orientation and position of groove 97 allows to center film receptor 111 in between upper jaw 58 and lower jaw 59 in order to allow a corresponding x-ray imaging of a patient's bitewing, as illustrated in Fig. 7. Middle indicium 67 of aiming gauge 61 is associated with a corresponding medium position of film receptor 111 and allows to align the x-ray source accordingly.

Film receptor 111 substantially corresponds to film receptor 205, in particular in that it comprises a plate 116 with a film face 117 on which an x-ray film can be disposed and lateral fixtures 118, 119 each having a lateral rail protruding from film face 117 at a lateral edge of film receptor 111 and a frontal projection facing film face 117 allowing to position and hold an x-ray film on film face 117 in between lateral fixtures 118, 119. However, the distance in between lateral fixtures 118, 119 substantially corresponds to the length of the shorter edges of rectangular front surface 3 of dental x-ray film 2. Thus, film receptor 111 is adapted to receive dental x-ray film 2 of film format 2. Indentations 123, 124 are provided at the center of the lateral edges of film receptor 111, allowing a facilitated manipulation of film receptor 111. The varying shape of film receptor 111 allows an easy distinction from film receptor 5 of the same film format for the user.

Since groove 97 on indicator pole 82 comprises a substantially perpendicular orientation as compared to groove 45 on indicator pole 21, the geometry of film receptor 111 is also adapted to receive dental x-ray film 2 in a transverse position on indicator pole 82. In this transverse position, x-ray film 2 is disposable in a position inside film receptor 111 in which the longer edges of rectangular front surface 3 of dental x-ray film 2 are substantially parallel to engagement surfaces 91, 92 of bite section 89 and the shorter edges of rectangular front surface 3 of dental x-ray film 2 are substantially perpendicular to engagement surfaces 91, 92. Such a transverse orientation of x-ray film 2 is suitable, for instance, for radiography of the bitewing of a patient's posterior teeth 56, 57 in this transverse direction, as illustrated in Fig. 7.

In the place of film receptor 111, also film receptor 5 can be attached to indicator pole 82 by inserting nose 16 of film receptor 5 into groove 97. In this configuration, the geometry of film receptor 5 is adapted to receive dental x-ray film 2 in a vertical position on indicator pole 82. In this vertical position, x-ray film 2 is disposed in a position inside film receptor 111 in which the longer edges of rectangular front surface 3 of dental x-ray film 2 are substantially perpendicular to engagament surfaces 91, 92 of bite section 89 and the shorter edges of rectangular front surface 3 of dental x-ray film 2 are substantially in parallel to engagement surfaces 91, 92. Such a vertical orientation of x-ray film 2 on indicator pole 82 is suitable, for instance, for radiography of a patient's posterior teeth 56, 57 in this vertical direction, in particular where it is necessary to get a radiograph for paro applications. In the place of film receptor 111, also film receptor 205 can be attached to indicator pole 82.

Correspondingly, film receptor 111 can also be attached to indicator pole 21 by inserting nose 16 of film receptor 111 into groove 45 of indicator pole 21. In this configuration, the geometry of film receptor 111 is adapted to receive dental x-ray film 2 in a vertical position on indicator pole 21. In this vertical position, x-ray film 2 is disposed in a position inside film receptor 111 in which the longer edges of rectangular front surface 3 of dental x-ray film 2 are substantially perpendicular to support surfaces 38, 39 of bite section 32 and the shorter edges of rectangular front surface 3 of dental x-ray film 2 are substantially in parallel to support surfaces 38, 39. Such a vertical orientation of x-ray film 2 on indicator pole 21 is suitable, for instance, for radiography of the front teeth 156, 157 in the upper and/or lower jaw 58, 59 in this vertical direction. The basic setup is illustrated in Fig. 5, wherein film receptor 5 shown in Fig. 5 receiving film 2 in a horizontal direction needs to be replaced by film receptor 111 receiving film 2 in a vertical direction.

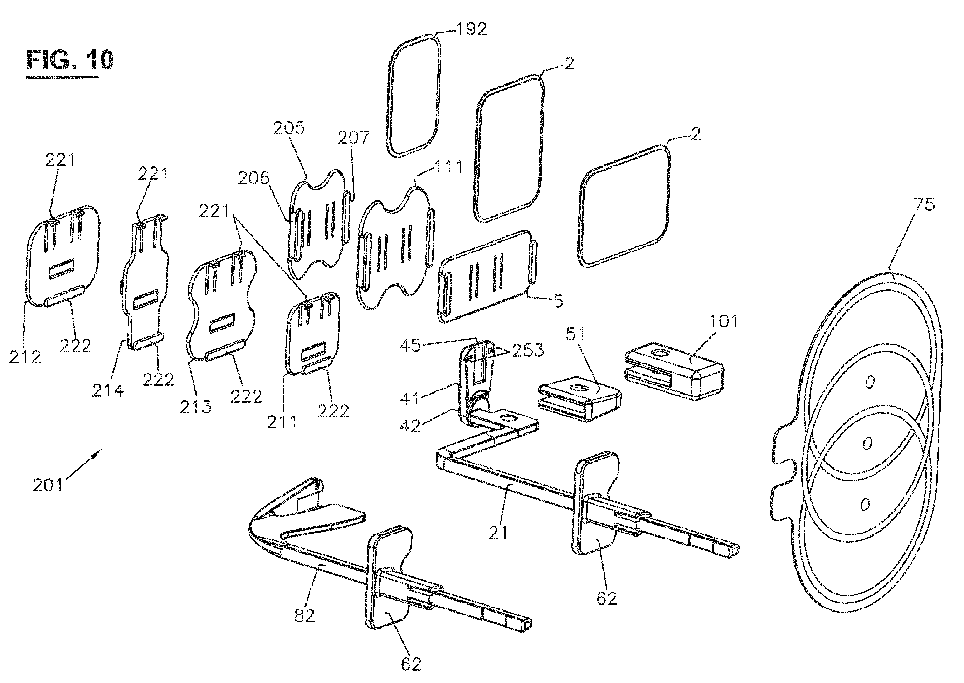

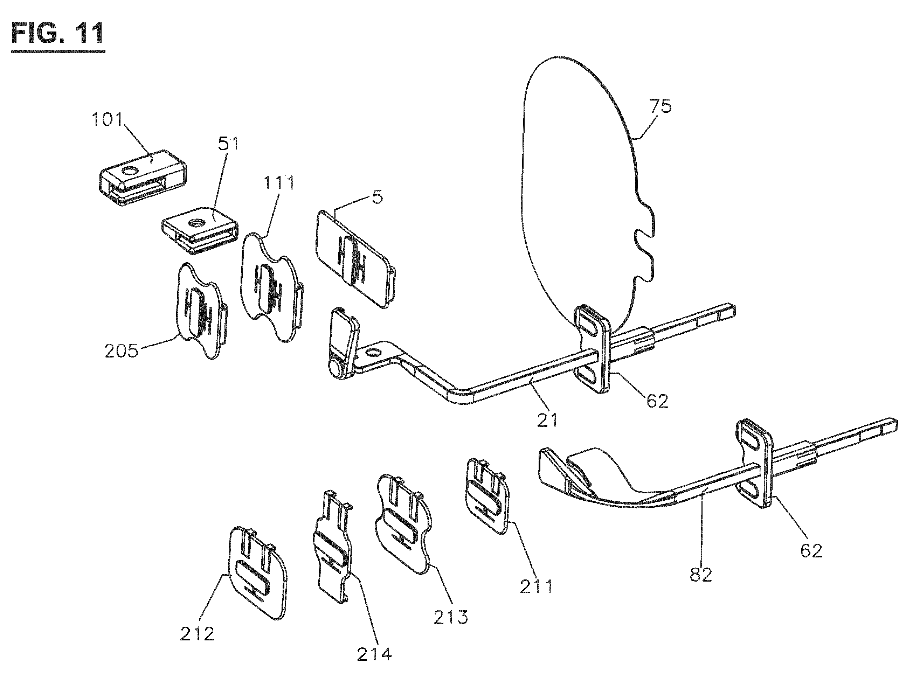

Figs. 10 and 11 show an intraoral positioning device 201 for dental x-ray films 2, 192 according to a fourth embodiment. Corresponding features with respect to intraoral positioning devices 1, 71, 81 shown in Figs. 1 - 9 are denoted by the same reference numerals.

Device 201 comprises indicator poles 21, 82 according to the above description. Thus, device 201 allows to carry out a periapical view radiography on the upper jaw 58 and/or lower jaw 59 and/or of the bitewing inside a patient's oral cavity by alternatively applying indicator poles 21, 82 as required. On each indicator pole 21, 82, mounting 62 of aiming gauge 61 is provided, on which indication panel 75 can be attached before using the respective indicator pole 21, 82.

Device 201 comprises bite blocks 51, 101 according to the above description. Each of bite blocks 51, 101 can be attached to bite section 32, of the respective indicator pole 21 that is to be used. Thus, device 201 allows to carry out radiography on the posterior teeth 56, 57 and/or on the front teeth 156, 157 inside a patient's oral cavity by alternatively applying one of bite blocks 51, 101 on the respective indicator pole 21, as required.

Device 201 comprises film receptors 5, 111, 205 according to the above description. Thus, device 201 allows to carry out radiography on various film formats, in particular film format 0 and/or film format 2, and in various orientations of the x-ray films, in particular in a transverse and/or vertical orientation, by alternatively applying one of film receptors 5, 111, 205 on the respective indicator pole 21, 82 as required. Preferably, film receptors 5, 111, 205 are in particular used to receive analog x-ray films.

Device 201 comprises film receptors 211, 212, 213, 214. Preferably, film receptors 211 - 214 are in particular used to receive digital x-ray films 202. Film receptor 211 is adapted to receive an x-ray film of film format 0, film receptor 212 to receive an x-ray film of film format 1, and each of film receptors 213, 214 to receive an x-ray film of film format 2. In particular, the distance in between lateral fixtures 221, 222 of film receptors 211 - 214 is chosen such that it substantially corresponds to the respective film format. More particularly, the distance in between lateral fixtures 221, 222 of film receptors 211, 212, 213 substantially corresponds to the length of the shorter edges of a digital x-ray film 202 of the respective film format, and the distance in between lateral fixtures 221, 222 of film receptor 214 substantially corresponds to the length of the longer edges of a digital x-ray film 202 of the respective film format. Thus, device 201 allows to carry out radiography on various film formats, in particular film format 0 and/or film format 1 and/or film format 2, various film types, in particular analog and digital x-ray films, and in various orientations of the x-ray films, in particular in a transverse and/or vertical orientation, by alternatively applying one of film receptors 5, 111, 205, 211, 212, 213, 214 on the respective indicator pole 21, 82 as required.

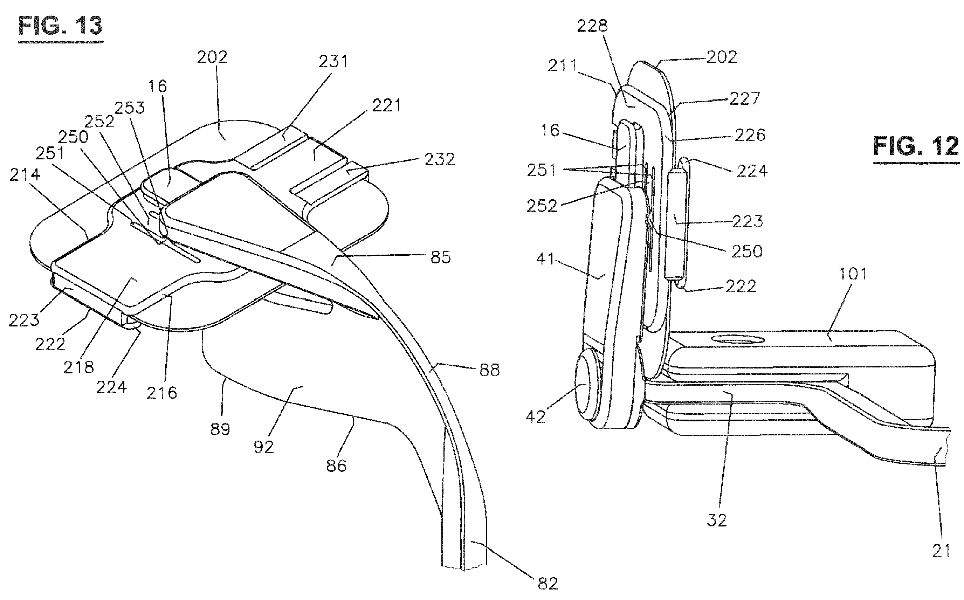

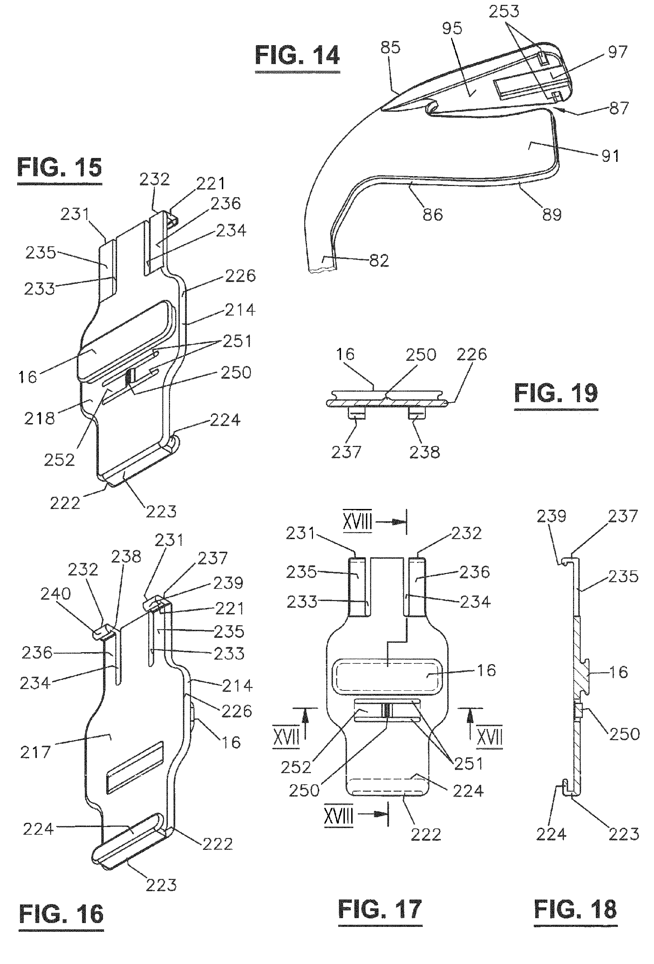

The functionality of film receptors 211, 212, 213, 214 is illustrated in Figs. 12 - 19 in greater detail on the example of film receptors 211, 214. Film receptors 212, 213 substantially correspond to film receptor 211, 214 with the exception of a differing size and/or differing distance in between lateral fixtures 221, 222 and/or differing position of lateral fixtures 221, 222 according to the respective film format and/or differing orientation of the received x-ray film as described above.

Film receptor 214 substantially corresponds to film receptor 5, in particular in that it comprises a plate 216 with a film face 217 on which an x-ray film can be disposed and a rear face 218 comprising nose 16 adapted to be inserted into groove 45, 97 of indicator pole 21, 82. The respective position of lateral fixtures 221, 222 of film receptor 214 substantially corresponds the position of lateral fixtures 8, 9 of film receptor 5 such that they are adapted to receive the dental x-ray film at its shorter edges. Film receptor 211 substantially corresponds to film receptor 205, in particular in that it comprises a plate 226 with a film face 227 on which an x-ray film can be disposed and a rear face 228 comprising nose 16 adapted to be inserted into groove 45, 97 of indicator pole 21, 82. The respective position of lateral fixtures 221, 222 of film receptor 214 substantially corresponds the position of lateral fixtures 206, 207 of film receptor 205 such that they are adapted to receive the dental x-ray film at its longer edges.

First lateral fixture 222 of film receptors 211, 214 substantially corresponds to lateral fixtures 8, 9, 118, 119, 206, 207 of film receptors 5, 111, 205 in that it comprises a lateral rail 223 protruding from film face 217, 227 at a lateral edge of film receptor 211, 214 and a frontal projection 224 facing film face 217, 227 allowing to position and hold x-ray film 202 on film face 217, 227 in between lateral fixtures 221, 222.

Second lateral fixture 221 of film receptors 211, 214 differs from lateral fixtures 8, 9, 118, 119, 206, 207 of film receptors 5, 111, 205 in that it comprises two snappers 231, 232 spaced from one another along a lateral edge of film receptor 211, 214. The distance in between the outer ends of snappers 231, 232 substantially corresponds to the length of first lateral fixture 222 at the opposed lateral edge of film receptor 211, 214. Each snapper 231, 232 comprises a resilient plate section 235, 236 provided in plate 216, 226. Resilient plate sections 235, 236 are defined by surrounding respective slits 233, 234 in plate 216, 226. Slits 233, 234 extend in a direction toward first lateral fixture 222 at the opposed lateral edge of film receptor 211, 214. Resilient plate sections 235, 236 have a larger length than width. Resilient plate sections 235, 236 are substantially elastic in a direction perpendicular to film face 217, 227.

Each snapper 231, 232 comprises a lateral rail 237, 238 protruding from film face 217, 227 at a lateral edge of film receptor 211, 214 and a frontal projection 239, 240 facing film face 217, 227 allowing to position and hold x-ray film 202 on film face 217, 227 in between lateral fixtures 221, 222. Frontal projections 239, 240 are tapered towards their open end facing opposing first lateral fixture 222. The tapering at frontal projections 239, 240 comprises a curved surface. Frontal projections 239, 240 have a smaller length than frontal projection 224 of first lateral fixture 222.

In this way, x-ray film 202 can be advantageously inserted into film receptors 211, 214 by inserting a first edge of its edges into first lateral fixture 222 and then moving the rear surface of x-ray film 202 towards film face 217, 227. Thus, resilient plate sections 235, 236 will be at first pressed behind film face 217, 227 and the second edge of x-ray film 202 opposing the first edge will continuously slide along the curved surfaces of tapered frontal projections 239, 240 until reaching their outer end. At this point, resilient snappers 231, 232 will snap back to their unstressed position, thereby receiving the second edge of x-ray film 202 along lateral rails 237, 238 below frontal projections 239, 240. In this way, a manual mounting of x-ray film 202 on film receptors 211 - 214 is facilitated.

As best seen in Figs. 12 - 14, the rear face of film receptors 5, 111, 205, 211 - 214 is further provided with two wedged elevations 250 neighboring nose 16 on both sides of the rectilinear direction of extension of nose 16. Each elevation 250 is arranged on a resilient plate section 252 of film receptors 5, 111, 205, 211 - 214. Resilient plate section 252 is provided by slits 251 substantially extending in parallel to the rectilinear direction of extension of nose 16. Elevations 250 are each arranged in between two respective slits 251. Elevations 250 are provided at a center region with respect to the length of nose 16. Elevations 250 substantially extend perpendicular with respect to the rectilinear direction of extension of nose 16. Two indentations 253 matching elevations 250 are provided next to groove 45, 97 on backing surface 43, 95. Each indentation 253 substantially extends perpendicular with respect to groove 45, 97. Thus, elevations 250 are adapted to engage with indentations 253, in particular to snap into indentations 253, during the mounting of film receptor 5, 111, 205, 211 -214 on backing surface 43, 95. In this way, a further fixation of film receptor 5, 111, 205, 211 - 214 on indicator pole 21, 82 at a predetermined position is provided.

The above described preferred embodiments are intended to illustrate the principles of the invention, but not to limit the scope of the invention. Various other embodiments and modifications to those preferred embodiments may be made by those skilled in the art without departing from the scope of the present invention that is solely defined by the claims.

## Claims

1. An intraoral positioning device for a dental x-ray film (2, 192, 202), the device comprising a film receptor (5, 111, 205, 211, 212, 213, 214) adapted to retain the x-ray film in a film plane, an aiming gauge (61) defining at least one predetermined position of the device relative to an x-ray beam, and an indicator pole (21, 82), the indicator pole comprising a first pole portion (22) and a second pole portion (23, 83) angled to one another, the aiming gauge (61) being attached or attachable to the periphery of the first pole portion (22), and the film receptor (5, 111, 205, 211, 212, 213, 214) being mountable to the second pole portion (23, 83) substantially at an outer end of the indicator pole (21, 82), **characterized in that** the second pole portion (23, 83) comprises:
- a bite section (32, 89) having at least one of a support surface (38, 39) on which a bite block (51, 101) adapted for clenching in between a patient's teeth (56, 57, 156, 157) is attachable and removable, and an engagement surface (52, 53, 91, 92, 102, 103) adapted for clenching in between a patient's teeth (56, 57, 156, 157); and
- a back section (41, 85) having a backing surface (43, 95) on which the film receptor (5, 111, 205, 211, 212, 213, 214) is attachable and removable, wherein said backing surface (43, 95) faces the bite section (32,89), such that the film receptor (5, 111, 205, 211, 212, 213, 214) after its attachment to the backing surface (43, 95) is substantially arranged in between the backing surface (43, 95) and the bite section (32, 89).

2. The device according to claim 1, **characterized in that** the first pole portion (22) and the second pole portion (23, 83) extend in a common pole plane, the pole plane being substantially coplanar or substantially parallel to at least one of said support surface (38, 39) and engagement surface (52, 53, 91, 92, 102, 103).

3. The device according to claim 1 or 2, **characterized in that** the first pole portion (22) and the second pole portion (23, 83) extend in a common pole plane, the pole plane being substantially perpendicular to said backing surface (43, 95).

4. The device according to one of claims 1 to 3, **characterized in that** the bite block (51, 101) comprises a plug opening (55, 105) in which said support surface (38, 39) is insertable.

5. The device according to claim 4, **characterized in that** the bite block (51, 101) comprises two opposed engagement surfaces (51, 52, 102, 103) for engaging with a patient's teeth (56, 57, 156, 157), the plug opening (55, 105) being arranged in between the two engagement surfaces (51, 52, 102, 103).

6. The device according to one of claims 1 to 5, **characterized in that** the film receptor (5, 111, 205, 211, 212, 213, 214) comprises a plate (6, 116, 216) with a film face (7, 117, 217) on which the x-ray film (2, 192, 202) can be disposed and a rear face opposed to said film face (7, 117, 217), the rear face being configured to be attached to said backing surface (43, 95).

7. The device according to claim 6, **characterized in that** the film receptor (5, 111, 205, 211, 212, 213, 214) comprises at least two lateral fixtures (8, 9, 118, 119, 221, 222) in which the x-ray-film (2, 192, 202) is insertable on said film face (7, 117, 217), said lateral fixtures (8, 9, 118, 119, 221, 222) being arranged at opposed sides of the film receptor (5, 111, 205, 211, 212, 213, 214).

8. The device according to claim 7, **characterized in that** at least one of said lateral fixtures (8, 9, 118, 119, 221, 222) comprises a frontal projection (12, 224, 239, 240) facing said film face (7, 117, 217) of said plate (6, 116, 216) by which frontal projection (12, 224, 239, 240) the x-ray-film (2, 192, 202) is retained on said film face (7, 117, 217).

9. The device according to one of claims 6 to 8, **characterized in that** the film receptor (5, 111, 205, 211, 212, 213, 214) is substantially open at least at a central portion of said film face (7, 117, 217), preferably over at least 50%, more preferred at least 80%, of the total area of said film face (7, 117, 217).

10. The device according to one of claims 1 to 9, **characterized in that** the back section comprises a joint (42) by which said back section (41, 85) is axially fixed on the indicator pole (21, 82) and radially rotatable around said bite section (32, 89).

11. The device according to one of claims 1 to 10, **characterized in that** the aiming gauge (61) comprises at least two indicia (66, 67, 68), more preferred at least three indicia, each indicium defining a different predetermined position of the device relative to the x-ray beam.

12. The device according to one of claims 1 to 11, **characterized in that** it comprises a plurality of said film receptors (5, 111, 205) for at least one of different film formats, different viewing angles, and different viewing formats.

13. The device according to one of claims 1 to 12, **characterized in that** it comprises a plurality of said bite blocks (51, 101) for at least one of different viewing angles, different viewing formats and different requirements with respect to the patient's teeth (56, 57, 156, 157).

14. The device according to one of claims 1 to 13, **characterized in that** it comprises at least two of said indicator poles (21, 82) each adapted for at least one of different viewing angles, different viewing formats and different requirements with respect to the patient's teeth (56, 57, 156, 157).

15. The device according to one of claims 1 to 14, **characterized in that** the bite block (51, 101) comprises a thermoplastic elastomer.
